# EUROPEAN PATENT APPLICATION

(11) **EP 4 451 446 A1**
(43) Date of publication of application: **23.10.2024**
(21) Application number: 23868607.5
(22) Date of filing: 21.09.2023
(51) Int. Cl.: H01M 50/262, H01M 50/502, H01M 50/591, H01M 50/588, H01M 50/517, H01M 50/289, H01M 50/24, H01M 10/655, H01M 10/6554

(54) **BATTERY MODULE AND BATTERY PACK INCLUDING SAME**

(30) Priority: 23.09.2022 KR 20220120412
(71) Applicant: LG Energy Solution, Ltd., Seoul 07335 (KR)
(72) Inventor: KIM, Min Bum, Daejeon 34122 (KR); JEON, Jong Pil, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2023/014364
(87) International publication number: WO 2024/063555

(57) **Abstract**

The present technology provides a battery module including a battery cell stack in which a plurality of battery cells with electrode leads are stacked, bus bar frame assemblies coupled to the electrode leads, and side frames disposed on both sides of the battery cell stack and coupled to the bus bar frame assemblies, in which the bus bar frame assemblies or the side frames include coupling projections and the other may inclulde insertion coupling portions, the bus bar frame assemblies and the side frames are coupled to each other by inserting the coupling projections into the insertion coupling portions, and both an upper surface and a lower surface of the battery cell stack, excluding surfaces thereof to which the side frames and the bus bar frame assemblies are coupled, are open. The present technology also provides a battery pack including the battery module.

## Description

### [Technical Field]

The present invention relates to a battery module including a battery cell stack, in which upper and lower surfaces of the battery cell stack are open.

The present invention also relates to a battery pack in which partitions for partitioning a battery module accommodation space are omitted to make better use of an inner space of the battery pack.

### [Cross Reference to Related Application]

This application claims the benefit of priority based on Korean Patent Application No. 10-2022-0120412, filed on September 23, 2022, and the entire content of the Korean patent application is incorporated herein by reference.

### [Background Art]

Recently, chargeable and dischargeable secondary batteries have been widely used as energy sources of wireless mobile devices. In addition, secondary batteries have attracted attention as energy sources of electric vehicles, hybrid electric vehicles, etc. suggested as a solution to air pollution due to existing gasoline vehicles and diesel vehicles using fossil fuel. Therefore, the types of applications using secondary batteries are diversifying due to the advantages of secondary batteries, and secondary batteries are expected to be applied to more fields and products in the future.

Two or three battery cells are arranged in secondary batteries for use in small-sized devices, but battery modules in which a plurality of battery cells are electrically connected are used in secondary batteries for use in medium-or large-sized devices such as vehicles. In such a battery module, a plurality of battery cells are connected in series or in parallel to form a battery cell stack, thereby increasing a capacity and an output.

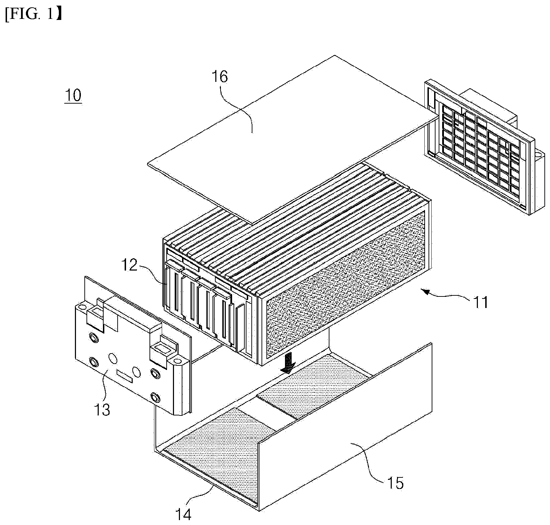

FIG. 1 is an exploded perspective view of a battery module 10 of the related art.

Referring to FIG. 1, a battery cell stack 11 is coupled to bus bar frame assemblies 12 and accommodated in a battery module housing. The battery module housing includes an end plate 13 and a module frame. The module frame may include a U-shaped frame in which a lower frame 14 and side frames 15 are integrally formed, and an upper frame 16 coupled to the U-shaped frame to cover an open upper part of the U-shaped frame. Alternatively, the module frame may be a mono frame in which the lower frame 14, the side frames 15, and the upper frame 16 are integrally formed. The battery cell stack 11 and the bus bar frame assemblies 12 may be stably accommodated in an inner space formed by the end plate 13 and the module frame.

However, when a battery pack is configured using such battery modules of the related art, the weight of the entire battery pack increases due to the weight or volume of a battery module housing. In addition, because a space occupied by the battery module housing is large, an energy density of the battery pack decreases.

In order to solve the above-described problem, attempts have been made to omit a part of the structure of a battery module housing to reduce the weight and volume of battery modules. For example, a lower frame, an upper frame, and a thick end plate were omitted, and a battery module was configured only with a battery cell stack, bus bar frame assemblies, and side frames. However, it was not easy to appropriately fix the remaining components due to the omission of the part of the structure of the module housing. Therefore, it was difficult to handle an assembly process and it was not easy to fix the remaining components inside the battery pack. In addition, the side frames were not securely coupled to the battery cell stack and the bus bar frame assemblies, thus failing to sufficiently support the battery cell stack and the bus bar frame assemblies.

Therefore, there is a need to develop a technique for securely fixing and coupling components of a battery module while reducing the weight of the battery module.

Meanwhile, a battery pack may be formed by arranging a plurality of battery modules and installing various types of control and protection systems such as a battery disconnect unit (BDU), a battery management system (BMS), and a cooling system.

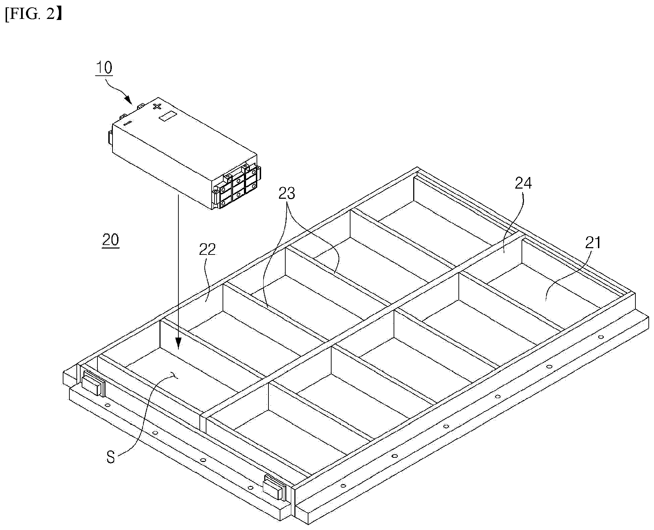

FIG. 2 is a schematic diagram illustrating installing a battery module 10 of the related art in a battery pack 20 of the related art.

Referring to FIG. 2, the battery pack 20 of the related art includes a base plate 21 on which the battery module 10 is installed, and side plates 22 surrounding edges of the base plate 21. A center frame 24 crossing a central part of the base plate 21 and partitions 23 disposed perpendicular to the center frame 24 to partition a battery module mounting area S are installed on the base plate 21. The partitions 23 partition the battery module mounting area S.

The partitions 23 are provided on both sides of the battery module 10 to support the battery module 10 and reinforces the structural rigidity of the battery pack 20. However, the inner structure of the battery pack 20 is complicated and the number of components to be assembled increases due to the partitions 23. Therefore, manufacturing costs of the battery pack 20 increase. In addition, the weight of the battery pack 20 increases due to the partitions 23, and the number of battery cells or battery modules to be installed decreases due to a space occupied by the partitions 23, thereby reducing a space utilization rate of the battery pack 20.

Therefore, an inner structure of a battery pack should be simplified to facilitate the installation of such a lightweight battery module and efficiently use a space of the battery pack.

### [Disclosure]

### [Technical Problem]

To address the above-described problem, the present invention is directed to improving the structural stability of a lightweight battery module by stably coupling bus bar frame assemblies and side frames.

The present invention is also directed to making better use of a space of a battery pack by omitting partitions of a battery pack of the related art.

### [Technical Solution]

According to an aspect of the present invention, a battery module of the present invention includes a battery cell stack in which a plurality of battery cells with electrode leads are stacked, bus bar frame assemblies coupled to the electrode leads, and side frames disposed on both sides of the battery cell stack, respectively, and coupled to the bus bar frame assemblies, in which one of the bus bar frame assemblies or the side frames include coupling projections and the other of the bus bar frame assemblies or the side frames include insertion coupling portions, and the bus bar frame assemblies and the side frames are coupled to each other by inserting the coupling projections into the insertion coupling portions, and both an upper surface and a lower surface of the battery cell stack, excluding surfaces thereof to which the side frames and the bus bar frame assemblies are coupled, are open.

As a concrete example, the bus bar frame assemblies may be coupled to a front surface and a rear surface of the battery cell stack, the bus bar frame assemblies may be provided with through slits into which the electrode leads are inserted, and the battery cell stack may be fixed on the bus bar frame assemblies as the electrode leads of different polarities of the plurality of battery cells passing through the through slits are bent toward each other and coupled to each other.

As a more concrete example, the side frames may extend in a longitudinal direction of the battery cell stack and are longer than the battery cell stack such that front ends of and rear ends of the side frames protrude from the front surface and the rear surface of the battery cell stack, respectively, and insertion coupling portions or coupling projections on inner sides of the front ends and the rear ends of the side frames may be coupled to corresponding coupling projections or insertion coupling portions on both sides of the bus bar frame assemblies.

For example, each of the bus bar frame assemblies may include a bus bar frame on which bus bars are mounted, and an insulation cover coupled to a surface of the bus bar frame opposite to a surface thereof facing the battery cell stack.

As a more concrete example, the side frames may extend in a longitudinal direction of the battery cell stack and are longer than the battery cell stack such that front ends of and rear ends of the side frames protrude from a front surface and a rear surface of the battery cell stack, respectively, and the coupling projections or the insertion coupling portions may be provided on both sides of the bus bar frame or the insulation cover. Insertion coupling portions or coupling projections on inner sides of the front ends and the rear ends of the side frames may be coupled to corresponding coupling projections or insertion coupling portions on the bus bar frame or the insulation cover.

As another example, the coupling projections or the insertion coupling portions may be provided on both sides of each of the bus bar frame and the insulation cover, and the insertion coupling portions or the coupling projections on the side frames may be coupled to corresponding coupling projections or insertion coupling portions on the bus bar frame and the insulation cover, respectively.

For example, the coupling projections may have circular, tetragonal, or cross-shaped cross sections.

As a concrete example, the bus bar frame assemblies may include the coupling projections, the side frames may include the insertion coupling portions, and the insertion coupling portions may be coupling grooves into which the coupling projections are inserted and tightly fitted.

As another example, the coupling projections may protrude from an outside of the coupling holes while passing through the coupling holes, and the battery module may further include screw-coupling members screw-coupled to ends of the coupling projections protruding from the outside of the coupling holes, and configured to pressurize outer sides of the side frames.

As another example, the side frames may include a first side frame coupled to one side of the battery cell stack and a second side frame coupled to another side of the battery cell stack, and the first side frame and the second side frame may be provided with through fastening holes extending in a height direction of the first side frame and the second side frame.

As a concrete example, the side frames may include a first side frame coupled to one side of the battery cell stack and a second side frame coupled to another side of the battery cell stack, and the first side frame and the second side frame may have complementary structures to be meshed with each other.

As a more concrete example, the first side frame may include a first stepped part protruding from an upper portion of an outer side thereof, the second side frame may include a second stepped part protruding from a lower portion of an outer side thereof and having a shape to be meshed with the first stepped part, and the battery module may be fastened with an adjacent battery module by meshing the first stepped part of the first side frame of the battery module with the second stepped part of the second frame of an adjacent battery module.

According to another aspect of the present invention, a battery pack includes a plurality of battery modules, and a pack housing configured to accommodate the plurality of battery modules therein, in which the plurality of battery modules are fixed to the pack housing by fastening side frames of the plurality of battery modules with a bottom plate of the pack housing, and a thermally conductive resin layer is provided between an open lower surface of the battery module and the bottom plate.

As another example, a pack housing configured to accommodate the plurality of battery modules therein may be provided, the plurality of battery modules may be fixed to the pack housing by meshing first side frames and second side frames of adjacent battery modules with each other to form partition members for partitioning adjacent battery cell stacks while fastening the partition members with a bottom plate of the pack housing, and a thermally conductive resin layer may be provided between an open lower surface of the battery module and the bottom plate.

### [Advantageous Effects]

According to the present invention, bus bar frame assemblies can be securely coupled to side frames. Accordingly, even when a part of a module frame is omitted, the bus bar frame assemblies can be stably supported by the side frames.

In a battery module of the present invention, a part of the module frame surrounding a battery cell stack is omitted to reduce the number of components and weight of the battery module. Therefore, a utilization rate of an inner space of the battery pack can be increased by installing such a battery module in a battery pack. Accordingly, an energy density of the battery pack can be increased.

### [Brief Description of the Drawings]

FIG. 1 is an exploded perspective view of a battery module of the related art.
FIG. 2 is a schematic diagram illustrating an installation relationship between a battery module and a battery pack of the related art.
FIG. 3 is an exploded perspective view of a battery module according to a first embodiment of the present invention.
FIG. 4 is a front view of a bus bar frame.
FIG. 5 is a schematic diagram illustrating a process of coupling a side frame and a bus bar frame assembly.
FIG. 6 is a perspective view of a battery pack in which battery modules of the first embodiment of the present invention are installed.
FIG. 7 is a schematic diagram illustrating a process of installing the battery module of the first embodiment of the present invention in a battery pack.
FIG. 8 is a schematic diagram illustrating a process of installing a side frame of a battery module on a bottom of a battery pack.
FIG. 9 is a side cross-sectional view of FIG. 8.
FIG. 10 is an exploded perspective view of a battery module according to a second embodiment of the present invention.
FIG. 11 is a schematic diagram illustrating a process of coupling bus bar frame assemblies and side frames in a battery module according to a third embodiment of the present invention.
FIG. 12 is an exploded perspective view of a battery module according to a fourth embodiment of the present invention.
FIG. 13 is a schematic diagram illustrating a coupling relationship between side frames in the battery module of the fourth example of the present invention.
FIG. 14 is a schematic diagram illustrating a process of coupling two battery modules of the fourth embodiment of the present invention.
FIG. 15 is a schematic perspective view of the battery modules of the fourth embodiment of the present invention installed in a battery pack.
FIG. 16 is a schematic diagram illustrating a process of installing side frames of the battery modules of the fourth embodiment of the present invention on a bottom of a battery pack.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

A battery module of the present invention may include a battery cell stack in which a plurality of battery cells with electrode leads are stacked, bus bar frame assemblies coupled to the electrode leads, and side frames disposed on both sides of the battery cell stack and coupled to the bus bar frame assemblies, in which the bus bar frame assemblies or the side frames may include coupling projections and the other may include insertion coupling portions, the bus bar frame assemblies and the side frames may be coupled to each other by inserting the coupling projections into the insertion coupling portions, and both an upper surface and a lower surface of the battery cell stack, excluding surfaces thereof to which the side frames and the bus bar frame assemblies are coupled, may be open.

A battery pack of the present invention may include a plurality of battery modules, and a pack housing configured to accommodate the plurality of battery modules therein, in which the plurality of battery modules may be fixed to the pack housing by fastening side frames of the plurality of battery modules with a bottom plate of the pack housing, and a thermally conductive resin layer may be provided between an open lower surface of the battery module and the bottom plate.

A battery pack of the present invention may include a pack housing configured to accommodate a plurality of battery modules therein, in which the plurality of battery modules may be fixed to the pack housing by meshing first side frames and second side frames of adjacent battery modules with each other to form partition members for partitioning the adjacent battery cell stacks while fastening the partition members with a bottom plate of the pack housing, and a thermally conductive resin layer may be provided between an open lower surface of the battery module and the bottom plate.

### [Embodiments of the Present Invention]

Hereinafter, embodiments of the present disclosure will be described in detail with reference to the accompanying drawings.

### (First Embodiment)

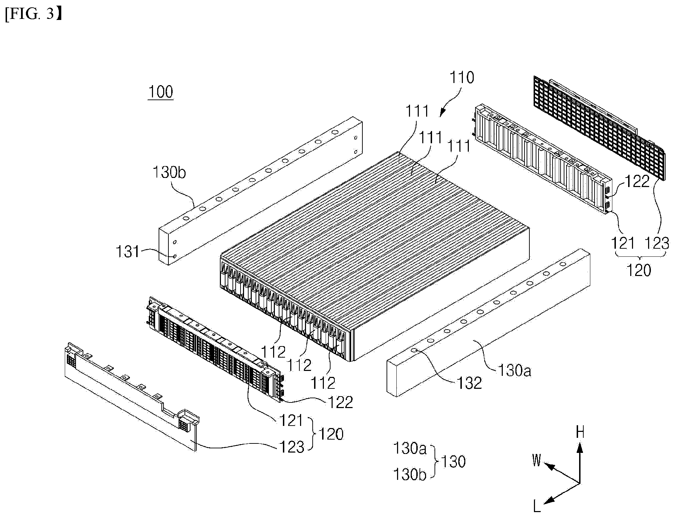

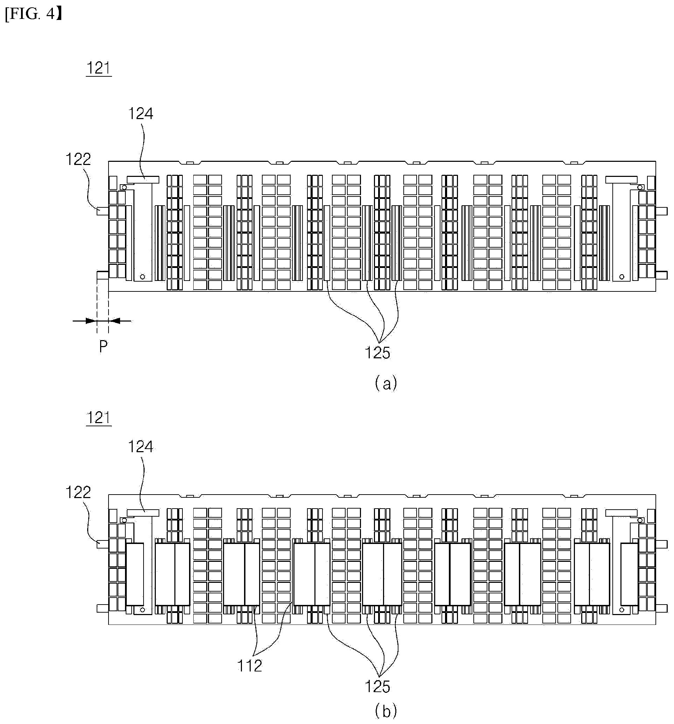

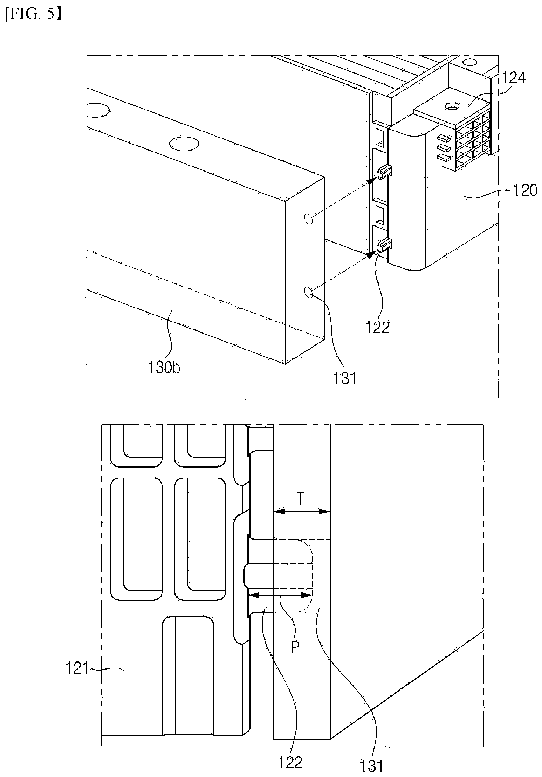

FIG. 3 is an exploded perspective view of a battery module according to a first embodiment of the present invention. FIG. 4 is a front view of a bus bar frame. FIG. 5 is a schematic diagram illustrating a process of coupling a side frame and a bus bar frame assembly.

Referring to FIG. 3, L denotes a longitudinal direction of a battery module 100. W denotes a width direction of the battery module 100, and H denotes a height direction of the battery module 100.

As shown in FIG. 3, the battery module 100 includes: a battery cell stack 110 in which a plurality of battery cells 111 with electrode leads 112 are stacked; bus bar frame assemblies 120 coupled to the electrode leads 112; and side frames 130 each disposed on one of both sides of the battery cell stack 110 and coupled to the bus bar frame assemblies 120. The bus bar frame assemblies 120 or the side frames 130 include coupling projections 122 and the other includes insertion coupling portions 131, so that the bus bar frame assemblies 120 and the side frames 130 are coupled when the coupling projections 122 are inserted into the insertion coupling portions 131. Both an upper surface and a lower surface of battery cell stack 110, excluding surfaces thereof on which the side frames 130 and the bus bar frame assemblies 120 are coupled, are open.

In the illustrated example, a plurality of battery cells 111 are stacked in the width direction W of the battery module 100 to form the battery cell stack 110. The battery cells 111 are stacked such that sides thereof are in contact with each other, and the sides of adjacent battery cells 111 may be fixed through a double-sided tape. Alternatively, a plurality of stacked battery cells may be bound together by a band to form a single battery cell stack 110. Both the double-sided tape and the band may be applied to stack battery cells. However, a method of stacking battery cells is not limited thereto, and other methods of appropriately stacking battery cells to be maintained in the form of a stack may be applied.

Meanwhile, each of the battery cells 111 includes an electrode lead 112 protruding in the longitudinal direction L. That is, a plurality of electrode leads 112 may protrude from front and rear surfaces of the battery cell stack 110. In this case, the bus bar frame assemblies 120 coupled to the electrode leads 112 may be disposed on the front and rear surfaces of the battery cell stack 110.

The bus bar frame assemblies 120 may include various types of bus bars (e.g., inter-bus bars and terminal bus bars) electrically connected to the electrode leads 112, a flexible circuit board connected to the bus bars, a connector, and the like.

Referring to FIG. 3, the bus bar frame assembly 120 according to the present embodiment includes a bus bar frame 121 that includes the bus bars, the flexible circuit board, the connector, etc., and an insulation cover 123 coupled to the bus bar frame 121. The insulation cover 123 is configured to electrically insulate the battery module 100, and is formed of an insulating material. For example, the insulation cover 123 may be formed of polycarbonate (PC), acrylonitrile butadiene styrene (ABS), or a combination thereof but is not limited thereto. The insulation cover 123 includes an insulation cover 123 whose surface opposite to a surface facing the battery cell stack 110 is coupled to the bus bar frame 121. In this case, through slits may be provided in the bus bar frame 121. The insulation cover 23 and the bus bar frame 121 are separately provided in the illustrated example but may be integrally formed to simplify the structure when necessary.

Referring to FIG. 4A, terminal bus bars 124 may be mounted on both ends of the bus bar frame 121. The battery module 100 may be electrically connected to an external electrical device or an adjacent battery module through the terminal bus bars 124. A plurality of through slits 125 into which the electrode leads 112 of the battery cells 111 are inserted may be provided in the bus bar frame 121. The bus bar frame assemblies 120 are coupled to the front and rear surfaces of the battery cell stack 110. The through slits 125 may be appropriately provided to correspond to the positions of the electrode leads 112.

As illustrated in FIG. 4B, the battery cells 111 of the battery cell stack 110 are electrically connected to each other as the electrode leads 112 of different polarities of the battery cells 111 passing through the through slits 125 are coupled to each other while being bent toward each other. In this case, an outermost electrode lead 112 among the electrode leads 112 passing through the through slits 125 may be bent toward the terminal bus bar 124 and coupled to the terminal bus bar 124.

Ends of electrode leads of different polarities may be coupled by welding in a state in which the electrode leads are stacked to overlap each other. As described above, when the electrode leads 112 of adjacent battery cells 111 pass through the through slits 125 in the bus bar frame 121 and are bent and coupled to each other, the bus bar frame 121 is inserted between a main body of the battery cell 111 and an electrode lead coupler. Accordingly, the battery cell stack 110 and the bus bar frame 121 may be fixed to each other. Thereafter, the assembly of the bus bar frame assembly 120 and the battery cell stack 110 is completed by coupling the insulating cover 123 to a side of the bus bar frame 121 opposite to a side from which the electrode leads 112 protrude.

Meanwhile, electrode leads may be electrically connected through an inter-bus bar. That is, an inter-bus bar may be installed between electrode leads of different polarities, and the electrode leads of different polarities may be bent toward the inter-bus bar and welded on the inter-bus bar. However, in the present invention, a part of a module frame of a battery module is omitted to simplify a structure and electrode leads are directly and electrically connected without an inter-bus bar. Accordingly, the number of components of the battery module may be further reduced and manufacturing costs may be reduced.

Side frames 130 are disposed on both sides of the battery cell stack 110. That is, according to the present invention, module frames (the side frames 130) are provided only on the both sides of the battery cell stack 110 rather than covering all of upper, lower, left and right surfaces of the battery cell stack 110 with the module frames of FIG. 1 as in the related art. In this regard, the battery module 100 of the present invention may be a battery module of module-less type in which a part of a module case is omitted. In such a battery module, upper and lower surfaces of a module frame are open to reduce the weight of the battery module. As will be described below, when a battery module is installed in a battery pack, a lower part of a module comes into direct contact into a thermally conductive resin layer in the battery pack, thereby simplifying a cooling path and increasing cooling efficiency. As described above, although the term "battery module" is used herein, it should be understood that actually, battery cells are directly installed in a battery pack such that the battery cells are exposed in the battery pack. In this regard, a battery pack 100 having a so-called cell-to-pack structure may be achieved by installing battery modules in a battery pack.

The side frames 130 may include a first side frame 130a coupled to one side of the battery cell stack 110 and a second side frame 130b coupled to another side thereof. That is, the side frames 130 are coupled to both sides of the battery cell stack 110 to which the bus bar frame assemblies 120 are not coupled. In other words, the side frames 130 are coupled to wider sides of the battery cell stack 110 (e.g., a pouch cell stack) on which electrode leads are not provided. When the battery modules are installed in the battery pack and electrically operated, a swelling phenomenon may occur, in which the volume of the battery cell stack 110 changes in the width direction due to a gas generated in the battery cells. Because the side frames 130 are coupled to both sides of the battery cell stack 110 in the width direction, the side frames 130 may absorb or support pressure caused due to the swelling phenomenon. In addition, the side frames 130 may protect the both sides of the battery cell stack 110 from external impacts and strengthen the rigidity of the battery module. To this end, the side frames 130 may be formed of a certain material to have a certain thickness. For example, the side frames 130 may be manufactured using a metal plate or plastic. Metal plates formed of steel, stainless steel, aluminum or the like may be used. The metal plates may be manufactured by extrusion as necessary. Hollow channels are formed in the extruded metal plates in an extrusion direction. Because the metal plates have the hollow channel, the weight of the side frames may decrease. The hollow channels may be used as gas venting channels, cooling channels or the like in the battery pack when necessary.

By coupling both side frames to a battery cell stack, a module-less battery module may be conveniently transported and installed in a battery pack. That is, the battery module may be transported to the inside of the battery pack by gripping the side frames with a jig. In this case, the side frames are not only objects to be gripped by the jig but also supports for supporting a battery cell stack.

In addition, by coupling the side frames to a bottom part of the battery pack, the battery module of the present invention may be easily installed in the battery pack. To this end, the side frames may be provided with certain through fastening holes 132 to be fastened with fastening members. FIG. 3 illustrates that a plurality of through fastening holes are provided at certain intervals in a longitudinal direction of side frames.

The side frames 130 are coupled to the bus bar frame assemblies 120. That is, the battery cell stack 110 may be coupled to the bus bar frame assemblies 120 and the bus bar frame assemblies 120 are coupled to the side frames 130 at both sides of the battery cell stack 110, thereby obtaining the battery module 100 with a compact coupling structure. Accordingly, the battery cell stack 110 is coupled to the bus bar frame assemblies 120 and the side frames 130 while being surrounded by the bus bar frame assemblies 120 and the side frames 130. Load applied on the electrode leads due to the bus bar frame assemblies 120 may be reduced by coupling the side frames 130 to the bus bar frame assemblies 120.

Specifically, as shown in FIGS. 3 and 5, the bus bar frame assemblies 120 or the side frames 130 includes coupling projections 122, and the other includes insertion coupling portions 131. The bus bar frame assemblies 120 and the side frames 130 are coupled by inserting the coupling projections 122 into the insertion coupling portions 131.

In the present embodiment, the bus bar frame 121 includes coupling projections 122 and the side frame 130 includes insertion coupling portions 131. However, on the contrary, the side frame 130 may include coupling projections, and the bus bar frame 121 may include insertion coupling portions corresponding of the coupling projections of the side frame 130. That is, in the present invention, the bus bar frame assembly 120 and the side frame 130 are coupled by fit-coupling the coupling projections 122 and the insertion coupling portions 131. For fit-coupling, when the bus bar frame assembly 120 or the side frame 130 includes coupling projections 122, the other includes insertion coupling portions 131 corresponding to the coupling projections 122.

Referring back to FIG. 3, the side frames 130 disposed at both sides of the battery cell stack 110 are coupled to the bus bar frames 120.

In this case, the side frames 130 extend in the longitudinal direction L of the battery cell stack 110 to be longer than the battery cell stack 110 such that front and rear ends of each of the side frames 130 protrude from the front and rear surfaces of the battery cell stack 110, respectively. That is, the side frames 130 are longer than the battery cell stack 110, and the front and rear ends thereof protruding from the battery cell stack 110 **are coupled to** the bus bar frame assemblies 120. As described above, because the side frames 130 are formed to be longer than the battery cell stack 110, both sides of the battery cell stack 110 are not exposed to the outside, thereby more effectively protecting the battery cell stack 110 may be more efficiently protected from side impacts.

The insertion coupling portions 131 on inner sides of the front and rear ends of the side frames 130 are coupled to corresponding coupling projections 122 on both sides of the bus bar frame assemblies 120. The coupling projections 122 may be coupled to the insertion coupling portions 131 by interference fit. In this case, the insertion coupling portions 131 may be coupling grooves into which the coupling protrusions 122 are inserted. A diameter of the coupling grooves may be slightly smaller than that of the coupling projections 122 so that the coupling projections 122 may be interference-fitted into the coupling grooves. Alternatively, inner circumferences of the coupling grooves may taper such that a diameter of the coupling grooves gradually decrease. Accordingly, as the coupling projections 122 come closer to the inside of the coupling grooves, outer circumferences thereof may be tightly fitted and fixed onto inner circumferential surfaces of the coupling grooves.

The coupling projections 122 may have circular, tetragonal, or cross-shaped cross sections. In this case, a shape of the insertion coupling portion 131 may correspond to that of the coupling projection 122. However, the present invention is not limited thereto, and the insertion coupling portion 131 may be provided in a circular shape by reflecting assembly tolerance even when a cross section of the coupling protrusion 122 has a shape, e.g., a tetragonal shape or a cross shape, other than a circular shape. In this case, similar to a wedge, angled ends of the coupling projection 122 having, for example, a tetragonal or cross-shaped cross section may be fitted into a circular inner circumferential surface of the insertion coupling portion 131 when inserted into the insertion coupling portion 131 having a circular shape. Accordingly, the coupling projection 122 and the insertion coupling portion 131 may be more firmly coupled to each other.

FIGS. 3 to 5 illustrate that the bus bar frame 121 is provided with the coupling projections 122 and an end of the side frame 130 is provided with the insertion coupling portions 131. However, the present invention is not limited thereto. That is, the coupling projections 122 or the insertion coupling portions 131 may be formed on both sides of the insulation cover 123 rather than the bus bar frame 121, and the insertion coupling portions 131 or the coupling projections 122 may be formed on inner sides of the front and rears end of the side frame 130 to correspond to the coupling projections 122 or the insertion coupling portions 131. In this case, the bus bar frame 121 is coupled to the insulation cover 123 to form the bus bar frame assembly 120, and the side frame 130 is coupled to the insulation cover 123 to couple the side frame 130 and the bus bar frame assembly 120.

FIG. 5 illustrates that the bus bar frame assembly 120 is provided with the coupling projection 122 and the side frame 130 is provided with the insertion coupling portion 131. In this case, the insertion coupling portion 131 may be a coupling groove, ie., a groove of which one side is closed as described above. Alternatively, the insertion coupling portion 131 may be a hole passing through the side frame 130.

The insertion coupling portion 131 may be formed by drilling after the manufacture of the bus bar frame assembly 120 or the side frame 130.

In the present embodiment, a length P to which the coupling projection 122 is equal to or less than a thickness T of the side frame 130. That is, even when the coupling projection 122 is inserted into the insertion coupling portion 131, the coupling projection 122 does not pass through an outer side of the side frame 130.

One coupling projection 122 and one insertion coupling portion 131 may be provided at an interface between the bus bar frame assembly 120 and the side frame 130. That is, the coupling projection 122 and the insertion coupling portion 131 corresponding thereto may be installed in pair. However, in order to more stably couple the bus bar frame assemblies 120 and the side frames 130, a plurality of coupling projections 122 and a plurality of insertion coupling portions 131 may be installed in pairs.

By coupling the coupling projections 122 to the insertion coupling portions 131, the bus bar frame assemblies 120 and the side frames 130 may be firmly coupled to implement a module-less battery module having a compact structure. In addition, the coupling projections 122 and the insertion coupling portions 131 may serve as reference points during the assembly of the battery module, thus improving manufacturing efficiency of the battery module. For example, positions of the side frames 130 relative to the battery cell stack 110 and the bus bar frame assemblies 120 are naturally determined by simply inserting the insertion coupling portions 131 on the inner sides of the front and rear ends of the side frames 130 into the coupling projections 122 on the bus bar frame assemblies 120 while the bus bar frame assemblies 120 are coupled to the front and rear surfaces of the battery cell stack 100. In this regard, the coupling projections 122 and the insertion coupling portions 131 are reference points for determining positions of members to be coupled.

Referring back to FIG. 3, the first and second side frames 130a and 130b are provided with through fastening holes 132 extending in the height direction. One battery module 100 may be coupled to another battery module 100 adjacent thereto through the through fastening holes 132. In this case, coupling frames may further be provided to be coupled to an upper surface of the first side frame 130a and an upper surface of a second side frame 130b of the other battery module 100. The coupling frames may be provided with fastening holes corresponding to the through fastening holes 132. The coupling frames may be disposed on upper surfaces of side frames facing two adjacent battery modules, and the two adjacent battery modules may be coupled by inserting fastening members into the fastening holes and the through fastening holes 132 to pass therethrough.

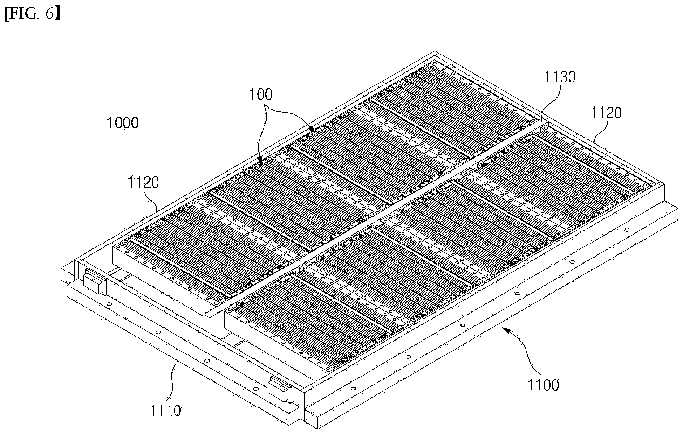

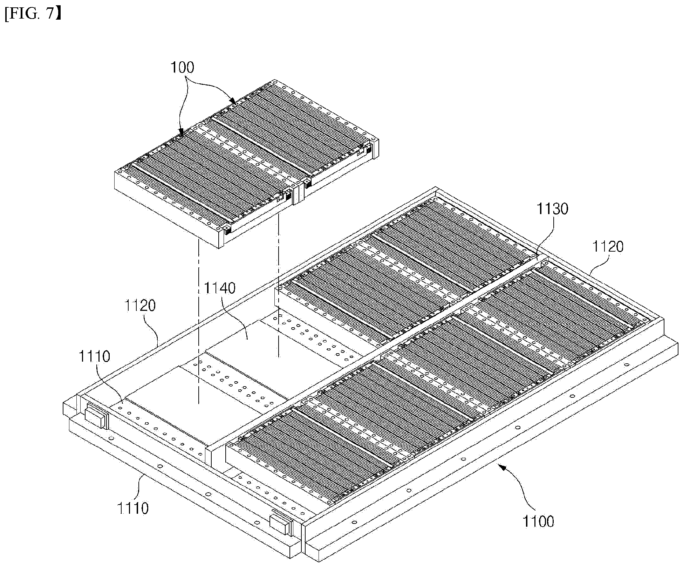

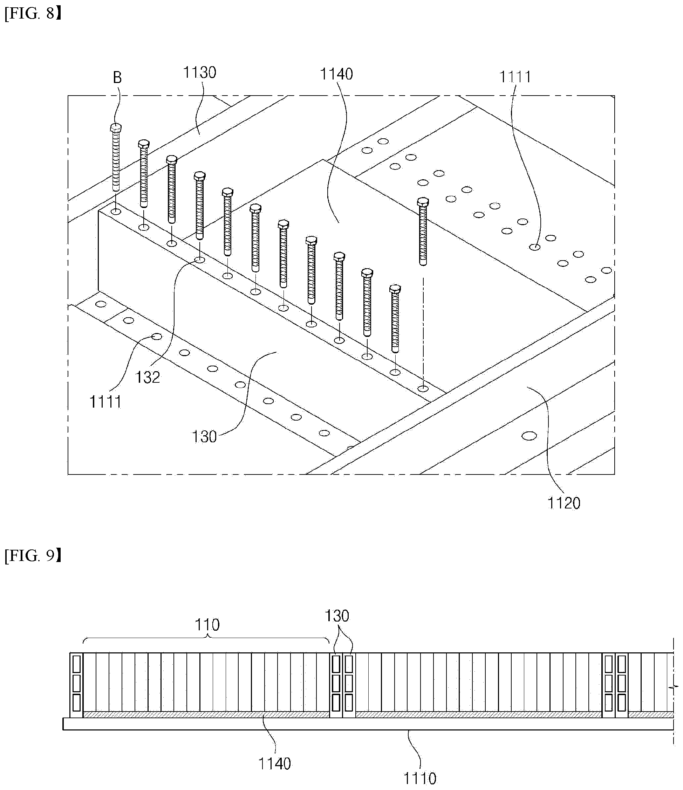

FIG. 6 is a perspective view of a battery pack in which the battery module of the first embodiment of the present invention is installed. FIG. 7 is a schematic diagram illustrating a process of installing the battery module of the first embodiment of the present invention in a battery pack. FIG. 8 is a schematic diagram illustrating a process of installing a side frame of a battery module on a bottom of a battery pack. FIG. 9 is a side cross-sectional view of FIG. 8.

Referring to FIGS. 6 and 7, a battery pack 1000 of the present invention includes a plurality of battery modules 100 according to the first embodiment, and a pack housing 1100 accommodating the plurality of battery modules 100 therein. The pack housing 1100 may include a bottom plate 1110 on which the battery modules 100 are mounted, side walls 1120 surrounding the bottom plate 1110, and an upper cover covering the battery modules 100. The bottom plate 1110 and the side walls 1120 may be coupled to form a lower pack housing. The upper cover may be referred to as an upper pack housing. In the present specification, the upper cover is not shown for simplicity of illustration. A center frame 1130 crossing the center of the bottom plate 1110 may be further provided.

As shown in FIG. 7, the battery modules 100 may be fixed in the pack housing 1100 by fastening side frames 130 (first and second side frames 130a and 130b) at both sides of the battery modules 100 to the bottom plate 1110 of the pack housing. A thermally conductive resin layer 1140 is provided between open lower surfaces of the battery modules 100 and the bottom plate 1110.

Referring to FIG. 8, bottom fastening holes 1111 are provided at positions in the bottom plate 1110 corresponding to positions of through fastening holes 132 in the side frames 130. The side frames 130 of the battery modules 100 may be installed on the bottom plate 1110 by inserting the through fastening holes 132 and the fastening holes 1111 to pass therethrough. The fastening members may be bolts B. For convenience of illustration, only the side frames 130 of the battery modules 100 are shown in FIG. 8.

Referring to FIG. 8, the bottom fastening holes 1111 are provided in two adjacent rows. Therefore, when the battery modules 100 are installed on the bottom plate 110, the side frames 130 of adjacent battery modules 100 come into contact with each other. According to the present embodiment, because both side frames 130 of the battery module 100 may be directly installed in the battery pack, there is no need to install partitions in the battery pack, unlike in the prior art. Therefore, a structure of the battery pack can be simplified, and a utilization rate of an inner space of the battery pack can be increased as described above. Accordingly, an energy density of the battery pack can be improved.

The number of through fastening holes 132 in the side frame 130 and the number of bottom fastening holes 1111 in the bottom plate 1110 shown in FIG. 8 may be appropriately adjusted according to the design of the battery module or the battery pack.

Meanwhile, not only an energy density but also thermal management is an important design factor in the design of a battery pack.

The battery pack 20 of the related art has a problem in that a cooling path is complicated due to a module frame structure of the battery module 10. This problem should be solved, because cooling efficiency decreases when the cooling path is complicated.

Referring to FIG. 9, a thermally conductive resin layer 1140 is provided between an open bottom surface of the battery module 100 and the bottom plate 1110. That is, in the present invention, the lower surface of the battery module 100 is open and thus the battery cell stack 110 and the thermally conductive resin layer 1140 may be in direct contact with each other. Therefore, a cooling path can be simplified and cooling efficiency can be improved, compared to the battery pack 20 of the related art.

### (Second Embodiment)

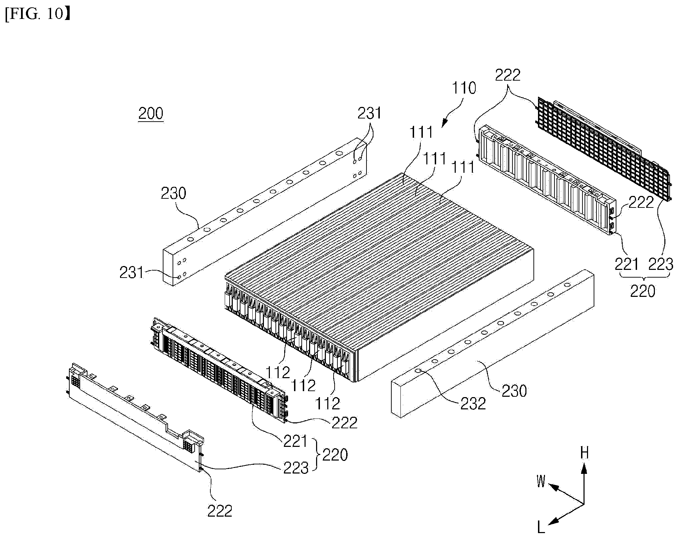

FIG. 10 is an exploded perspective view of a battery module 200 according to a second embodiment of the present invention.

In the first embodiment, the coupling projections 122 are provided only on the bus bar frame 121, whereas in the present embodiment, coupling projections 222 are provided on both sides of each of a bus bar frame 221 and an insulation cover 223. Accordingly, insertion coupling portions 231 are provided on inner sides of both side frames 230 to correspond to the coupling projections 222 on the bus bar frame 221 and the insulation cover 223.

However, as described above, unlike in FIG. 10, coupling projections may be provided on the side frames 230, and insertion coupling portions may be provided on the bus bar frame 221 and the insulation cover 223.

In the present embodiment, because the coupling projections 222 are provided on not only the bus bar frame 221 but also the insulation cover 223, the side frames 230 and bus bar frame assemblies 220 may be more firmly coupled to each other. Accordingly, the rigidity of a module-less battery module according to the present invention can be improved.

### (Third Embodiment)

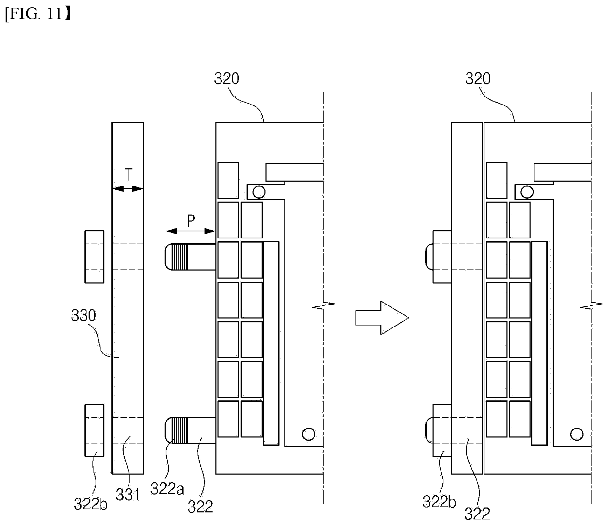

FIG. 11 is a schematic diagram illustrating a process of coupling a bus bar frame assemblies and side frames in a battery module according to a third embodiment of the present invention.

The present embodiment is different from the first and second embodiments in that coupling projections 322 on a busbar frame assembly 320 protrude to the outside while passing through side frames 330.

Referring to FIG. 11, the bus bar frame assembly 320 includes coupling projections 322 and the side frame 330 includes insertion coupling portions 331 corresponding to the coupling projections 322. The insertion coupling portions 331 are coupling holes into which the coupling projections 322 are inserted to pass therethrough.

In this case, the coupling projections 322 protrude from the outside of the coupling holes while passing through the coupling holes. The present embodiment is characterized in that screw-coupling members 322b configured to be screw-coupled to the coupling projections 322 are provided. To this end, screw threads may be provided on outer circumferences of protruding ends 322a of the coupling projections 322. The screw-coupling members 322b are screw-coupled to the ends 322a of the coupling projections 322 to pressurize an outer side of the side frames 330.

By fastening the screw-coupling members 322b and the coupling projections 322, the side frames 330 and the bus bar frame assembly 320 are prevented from being separated from each other. In addition, the side frames 330 are pressurized toward the battery cell stack 110 by the screw-coupling members 322b. Accordingly, the side frames 330 and the bus bar frame assembly 320 may be more strongly coupled and fixed to each other. In addition, because the bus bar frame assembly 320 is coupled to and supported by the side frames 330, swelling pressure of the battery cell stack 110 may be supported more easily.

When battery modules of the present embodiment are installed, two adjacent battery modules are spaced a distance, to which the coupling projections 322 protrude, from each other, thus forming a space between the two adjacent battery modules. The space may be used as a gas venting path or an air flow path of a battery pack, thereby more efficiently managing heat in the battery pack.

### (Fourth Embodiment)

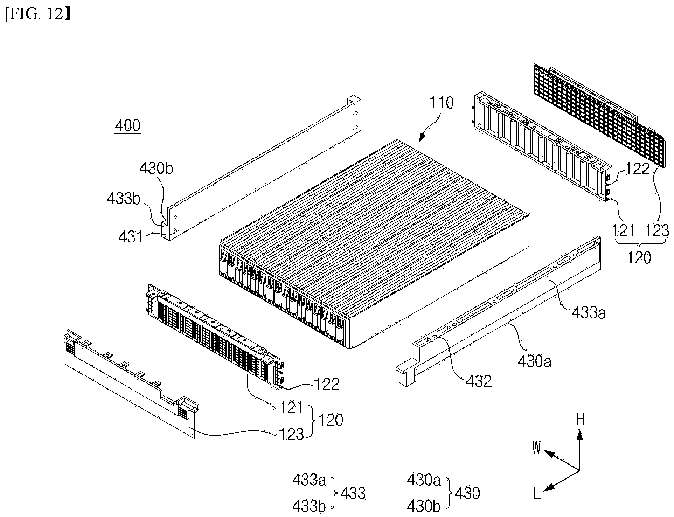

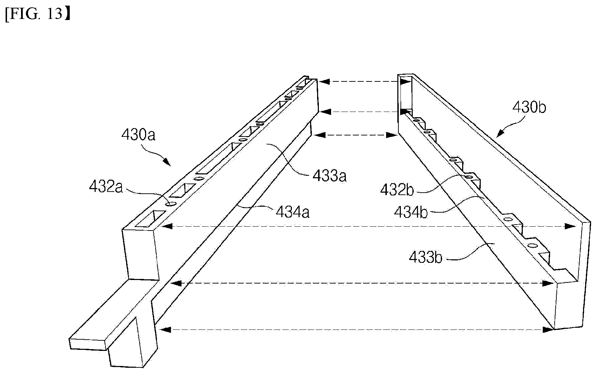

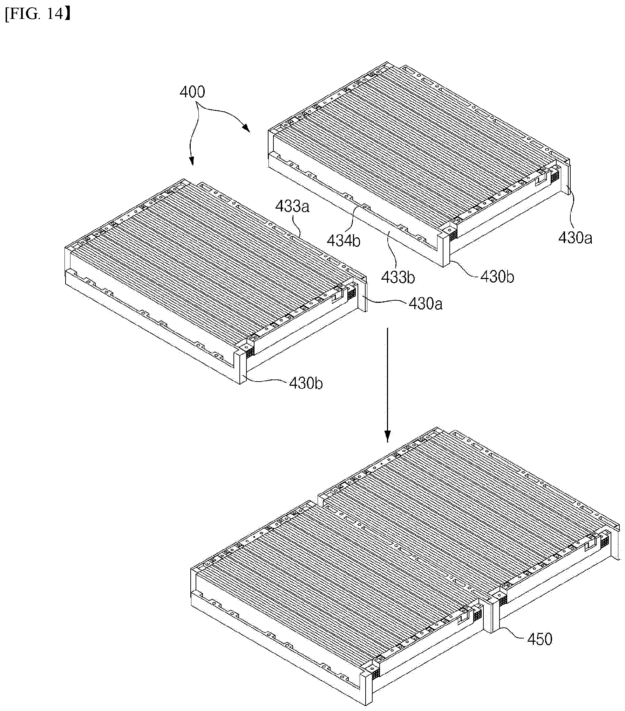

FIG. 12 is an exploded perspective view of a battery module according to a fourth embodiment of the present invention. FIG. 13 is a schematic diagram illustrating a coupling relationship between side frames in the battery module of the fourth example of the present invention. FIG. 14 is a schematic diagram illustrating a process of coupling two battery modules of the fourth embodiment of the present invention.

A battery module 400 of the present embodiment is differentiated in that side frames 430 on both sides thereof have complementary structures to be coupled to each other. The side frames 430 include a first side frame 430a coupled to one side of a battery cell stack 110 and a second side frame 430b coupled to another side thereof, and the first and second side frames 430a and 430b have complementary structures to be meshed with each other.

Referring to FIG. 13, the first side frame 430a has a first stepped part 434a protruding from an upper portion of an outer side thereof. Projections include a first projection 433a and a second projection 433b. That is, a first projection 433a is formed on the upper portion of the outer side of the first side frame 430a. Accordingly, the first stepped part 434a is formed between the first projection 433a and a main body of the first side frame 430a.

The second side frame 430b has a second stepped part 434b protruding from a lower portion of an outer side thereof and having a shape to be meshed with the first stepped part 434a. That is, a second projection 433b is formed on the lower portion of the outer side of the second side frame 430b. Accordingly, the second stepped part 434b is formed between the second projection 433b and a main body of the second side frame 430b. Adjacent battery modules may be fastened with each other by meshing first stepped parts 434a of first side frames and second stepped parts 434b of second side frame thereof with each other.

Referring to FIG. 13, the first and second projections 433a and 433b and the first and second stepped parts 434a and 434b are consecutively formed in a longitudinal direction of the side frames 430. However, embodiments are not limited thereto, and the first and second projections 433a and 433b and the first and second stepped parts 434a and 434b may be intermittently formed in the longitudinal direction of the side frames 430. In this case, the first and second stepped part 434a and 434b that are intermittently formed need be respectively formed on the first side frame 430a and the second side frame 430b to correspond to each other.

The first projection 433a and the first stepped part 434a are provided with first through fastening holes 432a extending in a height direction of the first side frame 430a. The second projection 433b and the second stepped part 434b are provided with second through fastening holes 432b extending in a height direction of the second side frame 430b.

The first through fastening holes 432a and the second through fastening holes 432b are respectively formed on the first and second side frames 430a and 430b to be aligned in the height direction.

Referring to FIG. 14, a first side frame 430a of one battery module 400 and a second side frame 430b of a battery module 400 adjacent thereto face each other. First stepped parts 434a and second stepped parts 434b of the side frames 430a and 430b facing each other are positioned to be meshed with each other. In this case, the first through fastening holes 432a and the second through fastening holes 432b are aligned to coincide each other in the height direction. Therefore, the first side frames 430a and the second side frames 430b of the two adjacent battery modules 400 may be coupled to each other by coupling fastening members through the aligned through-fastening holes 432a and 432b. A battery module assembly may be manufactured by connecting neighboring battery modules in series in a width direction as described above.

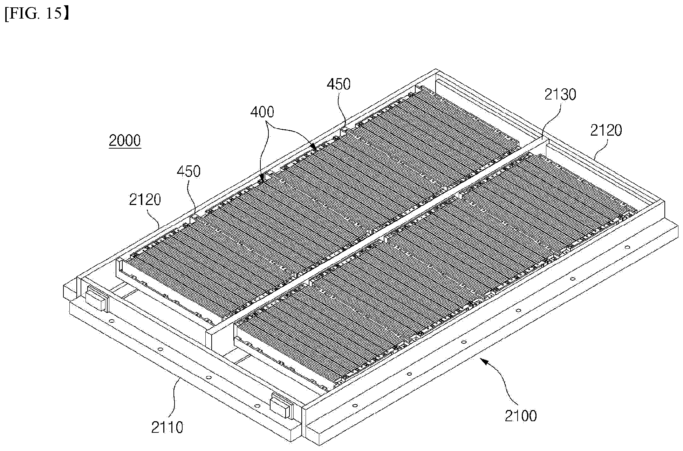

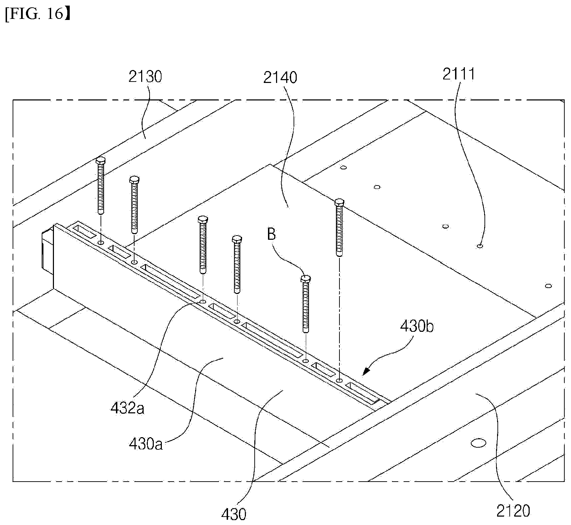

FIG. 15 is a schematic perspective view of battery modules of the fourth embodiment of the present invention installed in a battery pack. FIG. 16 is a schematic diagram illustrating a process of installing side frames of the battery modules of the fourth embodiment of the present invention on a bottom of a battery pack.

As shown in FIGS. 15 and 16, assemblies of first and second side frames 430a and 430b of adjacent battery modules 400 form stack partition members 450 for partitioning adjacent battery cell stacks 110. In the present embodiment, the stack partition member 450 is differentiated in that it is not a partition member installed in a pack housing 2100 but is formed by coupling battery modules to each other.

As shown in FIG. 15, two rows of battery module assemblies may be formed at both sides of a center frame 2130 by complementarily coupling side frames 430a and 430b, which face each other, of neighboring battery modules 400.

The battery modules 400 may be fixed in the pack housing 2100 by coupling the stack partition members 450 formed by the side frames 430a and 430b to a bottom plate 2110 of the pack housing 2100. After the first through fastening holes 432a and the second through fastening holes 432b are aligned to coincide each other in the height direction, ends of fastening members B may be coupled to the bottom plate 2110 when the fastening members B are coupled to the through fastening holes 432a and 432b while passing through the through fastening holes 432a and 432b, so that the battery modules 400 may be coupled to each other while coupling the battery modules 400 and the bottom plate 2110.

In the present embodiment, each of adjacent battery modules 400 include side frames 430 to be complementarily coupled to each other. Therefore, in the battery pack 2000, the battery modules 400 are coupled to each other as well as to the bottom plate 2110. Accordingly, the battery module 400 may be installed more stably and firmly in the battery pack 2000. The battery pack 2000 also includes sidewalls 2120.

As shown in FIG. 16, a thermally conductive resin layer 2140 is provided between an open lower surface of the battery module 400 and the bottom plate. That is, in the present invention, the lower surface of the battery module 400 is open and thus the battery cell stack 110 and the thermally conductive resin layer 2140 may be in direct contact with each other. Therefore, a cooling path can be simplified and cooling efficiency can be improved, compared to the battery pack 20 of the related art.

Similarly, there is no need to install partition members in the battery pack 2000 of the present embodiment in advance. This is because first and second side frames 430a and 430b of adjacent battery modules are coupled to each other to form a stack partition member 450. Therefore, similarly, in the present embodiment, a space utilization rate of the battery pack 2000 can be improved and an energy density of the battery pack 2000 can be further improved.

Referring to FIG. 16, in the battery pack 2000 in which battery modules 400 according to the present embodiment are installed, side frames 430 of two adjacent battery modules 400 are meshed with each other to form bottom fastening holes 2111 in a line. Because the side frames 430 are meshed with each other, the number of fastening members may decrease relatively. Therefore, an energy density of the battery pack 2000 in which the battery modules 400 according to the present embodiment are installed can be improved more than that of the battery pack 1000 in which the battery modules 100 and 200 of different embodiments are installed.

In addition, other components that are the same as those in the previous embodiments may also apply to the battery module 400 of the present embodiment and a detailed description thereof will be omitted here. For example, FIG. 12 illustrates that the coupling projections 122 are provided only on the bus bar frame 121 but the coupling projections 122 may be provided on the bus bar frame 221 and the insulation cover 223 as in the second embodiment. Alternatively, the screw-coupling members 322b configured to be coupled to the coupling projections 322 passing through the side frames 330 may be further provided as in the third embodiment.

The above description is only an example of the technical idea of the present invention and various modification and changes may be made by those of ordinary skill in the technical field to which the present invention pertains without departing from the essential features of the present invention. Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

In the present specification, terms representing directions such as upper, lower, left, right, forward and backward directions are used only for convenience of description and thus it will be obvious that these terms may be changed according to a position of an object or an observer.

### (Reference Numerals)

10: battery module of related art
20: battery pack of related art
100, 200, 400: battery module
110: battery cell stack
111: battery cell
120, 220, 320: bus bar frame assembly
121, 221: bus bar frame
122, 222, 322: coupling projection
123, 223: insulation cover
130, 230, 430: opposite side frames
131, 231, 331, 431: insertion coupling portion
132, 232, 432: through fastening hole
433a: first projection
433b: second projection
434a: first stepped part
434b: second stepped part
1000, 2000: battery pack
1100, 2100: pack housing
1140, 2140: thermally conductive resin layer

## Claims

1. A battery module comprising:
a battery cell stack in which a plurality of battery cells with electrode leads are stacked;
bus bar frame assemblies coupled to the electrode leads; and
side frames disposed on both sides of the battery cell stack, respectively, and coupled to the bus bar frame assemblies,
wherein one of the bus bar frame assemblies or the side frames comprise coupling projections and the other of the bus bar frame assemblies or the side frames comprise insertion coupling portions, and the bus bar frame assemblies and the side frames are coupled to each other by inserting the coupling projections into the insertion coupling portions, and
wherein both an upper surface and a lower surface of the battery cell stack, excluding surfaces thereof to which the side frames and the bus bar frame assemblies are coupled, are open.

2. The battery module of claim 1, wherein the bus bar frame assemblies are coupled to a front surface and a rear surface of the battery cell stack,
wherein the bus bar frame assemblies are provided with through slits into which the electrode leads are inserted, and
wherein the battery cell stack is fixed on the bus bar frame assemblies as the electrode leads of different polarities of the plurality of battery cells passing through the through slits are bent toward each other and coupled to each other.

3. The battery module of claim 2, wherein the side frames extend in a longitudinal direction of the battery cell stack and are longer than the battery cell stack such that front ends of and rear ends of the side frames protrude from the front surface and the rear surface of the battery cell stack, respectively, and
wherein insertion coupling portions or coupling projections on inner sides of the front ends and the rear ends of the side frames are coupled to corresponding coupling projections or insertion coupling portions on both sides of the bus bar frame assemblies.

4. The battery module of claim 1, wherein each of the bus bar frame assemblies comprises:
a bus bar frame on which bus bars are mounted; and
an insulation cover coupled to a surface of the bus bar frame opposite to a surface thereof facing the battery cell stack.

5. The battery module of claim 4, wherein the side frames extend in a longitudinal direction of the battery cell stack and are longer than the battery cell stack such that front ends of and rear ends of the side frames protrude from a front surface and a rear surface of the battery cell stack, respectively, and
wherein the coupling projections or the insertion coupling portions are provided on both sides of the bus bar frame or the insulation cover, and
wherein insertion coupling portions or coupling projections on inner sides of the front ends and the rear ends of the side frames are coupled to corresponding coupling projections or insertion coupling portions on the bus bar frame or the insulation cover.

6. The battery module of claim 5, wherein the coupling projections or the insertion coupling portions are provided on both sides of each of the bus bar frame and the insulation cover, and
wherein the insertion coupling portions or the coupling projections on the side frames are coupled to corresponding coupling projections or insertion coupling portions on the bus bar frame and the insulation cover, respectively.

7. The battery module of claim 1, wherein the coupling projections have circular, tetragonal, or cross-shaped cross sections.

8. The battery module of claim 3, wherein the bus bar frame assemblies comprise the coupling projections,
wherein the side frames comprise the insertion coupling portions, and
wherein the insertion coupling portions comprise coupling grooves into which the coupling projections are inserted and tightly fitted.

9. The battery module of claim 3, wherein the bus bar frame assemblies comprise the coupling projections,
wherein the side frames comprise the insertion coupling portions, and
wherein the insertion coupling portions comprise coupling holes which the coupling projections are inserted into and passed through.

10. The battery module of claim 9, wherein the coupling projections protrude from an outside of the coupling holes while passing through the coupling holes, and
wherein the battery module further comprises screw-coupling members screw-coupled to ends of the coupling projections protruding from the outside of the coupling holes, and configured to pressurize outer sides of the side frames.

11. The battery module of claim 1, wherein the side frames comprise a first side frame coupled to one side of the battery cell stack and a second side frame coupled to another side of the battery cell stack, and
wherein the first side frame and the second side frame are provided with through fastening holes extending in a height direction of the first side frame and the second side frame.

12. The battery module of claim 1, wherein the side frames comprise a first side frame coupled to one side of the battery cell stack and a second side frame coupled to another side of the battery cell stack, and
wherein the first side frame and the second side frame have complementary structures to be meshed with each other.

13. The battery module of claim 12, wherein the first side frame comprises a first stepped part protruding from an upper portion of an outer side thereof,
wherein the second side frame comprises a second stepped part protruding from a lower portion of an outer side thereof and having a shape to be meshed with the first stepped part, and
wherein the battery module is fastened with an adjacent battery module by meshing the first stepped part of the first side frame of the battery module with the second stepped part of the second frame of an adjacent battery module.

14. A battery pack comprising:
a plurality of battery modules according to one of claims 1 to 11; and
a pack housing configured to accommodate the plurality of battery modules therein,
wherein the plurality of battery modules are fixed to the pack housing by fastening side frames of the plurality of battery modules with a bottom plate of the pack housing, and
wherein a thermally conductive resin layer is provided between an open lower surface of the battery module and the bottom plate.

15. A battery pack comprising:
a plurality of battery modules according to claim 12 or 13; and
a pack housing configured to accommodate the plurality of battery modules therein,
wherein the plurality of battery modules are fixed to the pack housing by meshing first side frames and second side frames of adjacent battery modules with each other to form partition members for partitioning adjacent battery cell stacks while fastening the partition members with a bottom plate of the pack housing, and
wherein a thermally conductive resin layer is provided between an open lower surface of the battery module and the bottom plate.
